# EUROPÄISCHE PATENTSCHRIFT

(11) **EP 2 946 123 B1**
(45) Veröffentlichungstag und Bekanntmachung des Hinweises auf die Patenterteilung: **20.09.2017**
(21) Anmeldenummer: 13815452.1
(22) Anmeldetag: 16.12.2013
(51) Int. Cl.: F16C 11/08

(54) **KUGELGELENK**
BALL JOINT
JOINT SPHÉRIQUE

(30) Priorität: 15.01.2013 DE 102013200510; 16.01.2013 DE 102013200586
(43) Veröffentlichungstag der Anmeldung: 25.11.2015
(73) Patentinhaber: ZF Friedrichshafen AG, 88046 Friedrichshafen (DE)
(72) Erfinder: GRÄBER, Jürgen, 32351 Stemwede (DE); UNGRUH, Rainer, 48477 Hoerstel (DE); FRICKE, Cord, 49453 Dickel (DE)
(86) Internationale Anmeldenummer: PCT/EP2013/076757
(87) Internationale Veröffentlichungsnummer: WO 2014/111215

(56) Entgegenhaltungen:
- EP-A1- 0 343 881
- EP-A1- 2 642 141
- EP-A2- 0 846 611
- EP-A2- 0 916 859
- DE-A1- 2 441 916
- DE-A1- 3 823 755
- DE-A1- 19 914 452
- DE-A1- 19 930 445
- DE-C1- 19 841 410
- GB-A- 2 212 211

## Beschreibung

Die Erfindung betrifft ein Kugelgelenk, insbesondere ein Axialgelenk gemäß dem Oberbegriff des Anspruchs 1, eine Kugelschale nach Anspruch 8 sowie ein Verfahren zur Herstellung der Kugelschale nach Anspruch 14.

Kugelgelenke kommen im Stand der Technik häufig in Kraftfahrzeugen zum Einsatz, wo sie großen Belastungen ausgesetzt sind. Es sind hierbei Axial- und Radialgelenke bekannt. Die Bezeichnung Radial- oder Axialgelenk bezieht sich in bekannter Weise auf die Hauptbelastungsrichtung des betreffenden Kugelgelenks. So werden Axialgelenke hauptsächlich parallel zu ihrer Längsachse auf Zug- und/oder Druck belastet. Radialgelenke hingegen werden hauptsächlich quer zur Längsachse belastet.

Bei hohen Temperaturen innerhalb des Kugelgelenks die bei Axialgelenken z.B. durch direkte Ankopplung an ein betriebswarmes Lenksystem verursacht werden, dehnt sich die Kugelschale aus, was zu einem unerwünschten Anstieg des Moments innerhalb des Kugelgelenks führt. Zur Überwindung der Nachteile einer Wärmeausdehnung sind bekannte Kugelschalen mit speziell angeordneten Schlitzen vorgesehen. Des Weiteren kann die Kugelschale unterschiedliche Materialstärken aufweisen.

Aus dem Stand der Technik bekannte, z.B aus EP 0 846 611, durchgehend geschlitzte Kugelschalen, wie z.B. eine Schnappschale, sind aufgrund des Nachteils von erhöhter Kriechneigung sowie geringerer Tragfläche ungeeignet, da aufgrund der Schlitze die Kugelschale nicht flächendeckend am Gehäuse anliegt und somit ein Kriechen des Werkstoffs in den Freiraum zwischen den Schlitzen ermöglicht ist. Durch das Kriechen nimmt die Materialstärke bzw. Dicke der Kugelschale jedoch ab, was zu Spiel im Kugelgelenk führt.

Insbesondere sind die Schlitze bei einem Axialgelenk im Bereich der Gehäuseöffnung des Kugelgelenks nachteilig, da verursacht durch Zugkräfte in Richtung der Gehäuseöffnung hohe Belastungen auftreten. Zusätzlich muss aufgrund des erforderlichen Ausschlagwinkels des Zapfens die Gelenkgehäuse-öffnung relativ groß sein. Daher steht nur eine geringe Kontaktfläche zwischen Kugel, Kugelschale und Gelenkgehäuse zur Übertragung der Zugkräfte zur Verfügung. Maßgeblich für die Kontaktfläche ist die Fläche, in denen Kugel und Gehäuseinnenwand sich überdecken.

Zum Ausgleich von Verschleiß und Minimierung von Spiel innerhalb des Kugelgelenks ist es aus dem Stand der Technik bekannt, Kugelgelenke mit einem separaten elastischen Nachstellelement, wie z.B. einem Gummiring, auszugestalten. Die DE69407894 T2 offenbart ein Axialgelenk, bei dem in einem unteren, von dem Kugelzapfen bzw. der Gehäuseöffnung abgewandten elastischen Bereich der Kugelschale ein Nachstellelement ausgebildet ist.

Daher ist es eine Aufgabe der vorliegenden Erfindung, ein Kugelgelenk bzw. eine Kugelschale bereitzustellen, welche den vorgenannten Nachteilen entgegenwirkt und eine hohe thermische und mechanische Belastbarkeit der Kugelschale in verbesserter Weise sicherstellt. Die Verbesserung des Kugelgelenks soll auf konstruktiv einfache Art und Weise sicherstellt werden und somit kostengünstig herstellbar sein.

Diese Aufgabe wird durch ein Kugelgelenk mit den Merkmalen gemäß Anspruch 1, einer Kugelschale mit den Merkmalen gemäß Anspruch 8 sowie einem Verfahren zur Herstellung einer Kugelschale mit den Merkmalen gemäß Anspruch 14 gelöst. Bevorzugte Ausführungsformen der Erfindung sind in den abhängigen Ansprüchen definiert.

Es wird ein Kugelgelenk, insbesondere ein Axialgelenk, mit einem in einer Kugelschale aufgenommenen Kugelzapfen, bereitgestellt, wobei die Kugelschale mit dem Kugelzapfen in einem Gelenkgehäuse aufgenommen ist. Die Kugelschale ist einstückig mit wenigstens einem Federelement in einem unteren, von dem Kugelzapfen bzw. der Gehäuseöffnung abgewandten Bereich der Kugelschale ausgebildet. Mit anderen Worten sind ist das Federelement in die Kugelschale integriert. Dieser Bereich kann auch als Gehäuseboden oder gehäuseseitig bezeichnet werden. Das in die Kugelschale integrierte Federelement weist zumindest teilweise Unterbrechungen auf, so dass durch das Federelement ein Spiel und/oder ein Verschleiß innerhalb des Kugelgelenks unterbunden werden kann. Ein Verschleiß kann über die Lebensdauer bzw. Laufzeit eines Kugelgelenks bedingt durch Reibung oder thermisch verursachtes Kriechen des Kugelschalenwerkstoffs innerhalb des Kugelgelenks auftreten, wenn dieses z.B. in einem Fahrwerk eines Kraftfahrzeugs zur Verbindung von zumindest zwei Fahrwerksbauteilen eingesetzt wird. Der Verschleiß kann sich durch Spiel innerhalb des Kugelgelenks durch Geräusche bemerkbar machen und zu unzulässigem Spiel in der Lenkung führen. Im Extremfall fällt das Bauteil aus und versagt seine Funktion.

Durch die Integration des Federelementes in die Kugelschale kann darüber hinaus eine sehr kompakte Bauform erzielt werden. Es kann auf zusätzliche Bauteile, wie beispielsweise von der Kugelschale separate Nachstellelemente, wie Gummiringe, Federn (Tellerfedern) etc. verzichtet werden, die ansonsten zwischen Gehäuse und Kugelschale eingesetzt werden. Wenn das Federelement teilweise unterbrochen ist, insbesondere durch Schlitze, so kann die Unterbrechung sich über das gesamte Federelement oder auch Teile davon erstrecken. Durch die Ausformung und Länge der Unterbrechungen (Schlitze) in der gehäuseseitigen Kugelschale kann die Federcharakteristik des Federelements eingestellt werden. Die Federcharakteristik des Federelements kann auch durch die Materialstärke des Federelements beeinflusst werden.

Aufgrund der einfachen Konstruktion, welche dennoch stets die nötige Stabilität aufweist, werden die Herstellungskosten deutlich reduziert, weil die Kugelschale in einem Herstellungsschritt (z.B. durch Spritzgießen) erzeugt werden kann. Insgesamt wird somit eine Gelenkanordnung vorgesehen, welche die Belastbarkeit steigert, ein Gelenkspiel auch nach bzw. bedingt durch Verschleiß verhindert und konstante Reib-Momente im Temperatur-Einsatzbereich bei gleichzeitig kompakter Bauweise und niedrigen Kosten realisiert.

Speziell bei Axialgelenken bestehen besondere Anforderungen in Zug- und Druckrichtung. In Zugrichtung, das heißt in Richtung der Gehäuseöffnung, ist aufgrund des erforderlichen Ausschlagwinkels des Zapfens nur eine geringe vorhandene Kontaktfläche zwischen Kugel, Kugelschale und Gelenkgehäuse zur Übertragung der Zugkräfte vorhanden, weil die Gelenköffnung relativ groß sein muss. Der Traganteil der Kugelschale im Bereich der Gelenkgehäuseöffnung ist viel geringer als in entgegengesetzt wirkender Druckrichtung, weil die Kugelschale im Bereich des Bodens des Gelenkgehäuses, also auf der der Gehäuseöffnung gegenüberliegenden Seite, einen wesentlich größeren Flächenkontakt mit dem Gelenkgehäuse aufweist. Dadurch ergibt sich für die Kugelschale ein wesentlich größerer Traganteil als im Bereich der Gehäuseöffnung. Die Kugelschale kann mit anderen Worten nur dort tragen, wo eine Überdeckung der Flächen von Kugelschale mit dem Gehäuse bzw. mit der Gelenkkugel gegeben ist.

Durch die großen Ausschlagwinkel bei einem Axialgelenk ergeben sich in Zusammenhang mit den äußeren axial einwirkenden Kräften hohe Normalkräfte zwischen Kugel, Kugelschale und Gelenkgehäuseinnenseite. Die Belastung in Zugrichtung ist daher mit Blick auf den Verschleiß besonders kritisch zu betrachten. Deshalb müssen in Zugrichtung nach Möglichkeit sämtliche zur Verfügung stehenden Flächenanteile als Traganteil genutzt werden. Kugelschalen mit Unterbrechungen durch Schmiernuten oder Schlitze sind somit nicht zweckmäßig. Daher können Umformschalen eingesetzt werden, die im Gegensatz zu Schnappschalen keine der genannten Unterbrechungen aufweisen, insbesondere zumindest im Bereich der Gelenkgehäuseöffnung.

Wenn die Kugelschale als Schnappschale ausgebildet ist, weist diese im Gegensatz zur Umformschale bereits vor der Montage mit dem Kugelgelenk eine kugelige Innenkontur auf. Des Weiteren weist die Schnappschale axial verlaufende Schlitze, insbesondere im Bereich zur Gehäuseöffnung, auf, um das Aufschnappen bei der Montage der Kugelschale zu ermöglichen. Das ist jedoch mit dem Nachteil verbunden ist, dass die Belastbarkeit der Kugelschale und somit des gesamten Kugelgelenks reduziert wird, da im Bereich der Schlitze die Kugelschale die Kugel nicht wirkt bzw. trägt.

Eine Umformschale ist vor der Montage, becherförmig und weist insbesondere im Bereich der Gehäuseöffnung eine zylindrische Öffnung auf. Erst beim Schließen des Kugelgelenks während der Montage wird die zylindrische Kugelschale insbesondere auf der Seite der Gehäuseöffnung umgeformt und schmiegt sich an die Kugel an. Wird die Kugelschale als Umformschale ausgebildet und weist insbesondere im Gegensatz zu der Schnappschale keine Schlitze auf, besteht ebenso nur die Möglichkeit des Nachstellens der Lagerschale über die zuvor genannten Mittel, wie z.B. einen Gummiring. Zudem ist eine Umformschale üblicherweise aus Kunststoff hergestellt, was insbesondere bei hohen Temperaturschwankungen beispielsweise in einem Bereich von -40 °C bis +100 °C problematisch ist, da sich der Kunststoff der Lagerschale stärker ausdehnt als die aus Stahl gebildeten Bauteile, wie beispielsweise die Gelenkkugel oder der Kugelkopf des Kugelzapfens, der in der Lagerschale angeordnet ist. Wenn sich der Kunststoff durch Erwärmung ausdehnt und keinerlei Schlitze vorhanden sind, kommt es zu einem erhöhten Spannungsaufbau und Anstieg der Reibmomente, die einen weiteren Spannungsaufbau bewirken. Beide Effekte haben die Reduzierung der Belastbarkeit zur Folge.

Eine weitere Anforderung an Kugelgelenke besteht somit allgemein darin, dass Gelenke bei tiefen und hohen Temperaturen betrieben werden. Infolge des Zusammenziehens bei geschlitzten Kugelschalen entsteht bei tiefen Temperaturen ein Spalt und nicht zulässiges Spiel. Bei hohen Temperaturen, die bei Axialgelenken mit direkter Ankopplung an ein Lenksystem auftreten können, dehnt sich die Kugelschale aus, was zu sehr hohen unerwünschten Momenten im Kugelgelenk führt. Hohe Temperaturen können bei der Kugelschale des Weiteren zu Kriechprozessen führen, so dass nach Abkühlung nachteiliger Weise zusätzlich Spiel vorliegen kann. Dies kann reduziert werden, wenn sich die Kugelschale infolge vorhandener Schlitze ausdehnen und anpassen kann. Aber die Schlitze dürfen nicht in den hochbelasteten Bereichen nahe der Gehäuseöffnung liegen sondern müssen in den entgegen gesetzt angeordneten, höher belastbaren Bereich in die Nähe des Gehäusebodens verlagert werden.

Gemäß einer Weiterbildung der Erfindung weist das wenigstens eine Federelement einen ersten Bereich und einen daran anschließenden zweiten Bereich auf. Insbesondere schließt sich der zweite Bereich parallel zur Längsachse des Gelenkgehäuses, also axial bzw. in axialer Richtung an den ersten Bereich an. Der erste Bereich grenzt insbesondere an einen mittleren Bereich an. Ausgehend von der Gelenkgehäuseöffnung folgt eine einteilige bzw. einstückige Kugelschale dem Verlauf zwischen der Kugel und dem Gehäuse zu einem mittleren Bereich des Gehäuses. Der mittlere Bereich ist quer zur Längsachse des Gehäuses angeordnet. Dieser mittlere Bereich wird von einer Ebene geschnitten, die rechtwinklig zur Längsachse der Kugel und durch den Mittelpunkt der Kugel verläuft. Vom mittleren Bereich verläuft die Kugelschale des Weiteren etwa bis zu dem Pol der Kugel, wenn der Kugelzapfen nicht ausgelenkt ist und Längsachse des Kugelzapfens und des Gehäuses somit parallel verlaufen. Der Pol der Kugel befindet sich dort, wo quasi die Zapfenlängsachse die Kugel verlässt. Der zweite Bereich der Kugelschale schließt sich dem ersten Bereich an und reicht bis zum Ende der Kugelschale im Bereich des Pols der Kugel.

Mit Blick auf die vorgenannte Problematik eines Temperaturanstiegs innerhalb des Kugelgelenks und der damit verbundenen Ausdehnung der Kugelschale weist die Kugelschale gemäß eine weiteren Ausführung in wenigstens einem der Bereiche (erster oder zweiter Bereich) wenigstens eine Unterbrechung, insbesondere mehrere Unterbrechungen auf. Die Unterbrechung ist insbesondere durch Schlitze gegeben, die in etwa axialer Richtung, also in etwa parallel zur Längsachse des Gehäuses verlaufen. Diese Unterbrechungen tragen dazu bei, dass bei Ausdehnung der Kugelschale aufgrund eines Temperaturanstiegs, die z.B. durch erhöhte Reibung aufgrund von erhöhter Belastung hervorgerufen wird, das Reibmoment innerhalb des Kugelgelenks nicht unzulässig überschritten wird. Ein erhöhter Verschleiß oder im Extremfall ein Verklemmen des Kugelgelenks wird somit wirkungsvoll vermieden.

Gemäß noch einer weiteren Ausführungsform ist die Kugelschale als Umformschale ausgebildet, wobei im Bereich nahe der Gehäuseöffnung bzw. im Bereich des Kugelzapfens an der Kugelschale keine Schmiernuten bzw. Schlitze ausgebildet sind. Die Umformschalenausführung sieht eine insgesamt große Tragfläche vor und kann somit einer größeren Zugbelastung in Richtung Gehäuseöffnung standhalten. Auch ist die Ausführung der Kugelschale als Umformschale mit niedrigeren Herstellungskosten verbunden als bei einer Schnappschale.

Gemäß einer weiteren vorteilhaften Ausgestaltung der Erfindung weist der erste Bereich eine im Vergleich zu den übrigen Bereichen der Kugelschale größere Materialstärke auf. Insbesondere ist die Materialstärke in dem zweiten Bereich eine geringere als in dem ersten Bereich. Alternativ zum Begriff Materialstärke wird auch der Begriff Wandstärke bzw. Wanddicke genutzt. Im Schnitt betrachtet weist eine Kugelschale in jedem Bereich eine gewisse Dicke bzw. Wanddicke oder auch Wandstärke bzw. Materialstärke auf.

Die Lagerung der Kugel im Gelenkgehäuse mittels der Kugelschale besteht aus zwei Teilbereichen mit unterschiedlichen Federelementausführungen bzw. Federelementen mit unterschiedlichen Federsteifigkeiten. In dem ersten Bereich wirkt die Kugelschale bei Belastung des Kugelgelenks durch die Stauchung des ersten Bereichs mit vergleichsweise größerer Wanddicke als steifes Federelement. Dort können größere Kräfte aufgenommen werden - es sind aber nur sehr kleine Verformungen und somit Nachstellwege möglich. In dem zweiten Bereich liegt eine im Vergleich zum ersten Bereich auf Biegung beanspruchte Feder vor, die insbesondere eine geringere Wandstärke vorsieht. Damit ergibt sich im zweiten Bereich ein weiches Federelement mit einer weichen Nachstellfeder mit geringer Federrate bzw. Federsteifigkeit, die über große Wege federt, jedoch mit einer geringeren Kraft wirkt. Vorliegend bietet die Kugelschale eine Lösung mit sowohl steifem Federelement und hoher Federrate als auch weichem Nachstellelement, um das Nachstellen des Kugelgelenks zum einen nach einer Wärmeausdehnung, also nach dem Abkühlen auf normale Arbeitstemperaturen und zum anderen zum Spielausgleich bei Verschleiß des Kugelgelenks in einem großen Anforderungsbereich zu ermöglichen. Mit dieser geometrischen Auslegung genügt die Kugelschale den vielfältigen Anforderungen, ohne dass ein separates Nachstellelement eingesetzt werden muss.

Gemäß noch einer weiteren bevorzugten Ausführungsform weist die Kugelschale ausgehend von der Gelenkgehäuseöffnung zu dem von der Gelenkgehäuseöffnung abgewandten ersten Bereich hin, insbesondere ausgehend von der Mitte des Gelenkgehäuses zu dem ersten Bereich hin, eine Wanddicke mit zunehmender Materialstärke auf. Hierdurch wird eine besonders gute Spannungsverteilung, d. h. gleichmäßige Flächenpressungen bei Belastung, erreicht. Insbesondere die Kombination der ansteigenden Wanddicke mit dem Vorsehen der Schlitze in dem unteren Bereich sorgt aufgrund eines hierdurch erzielten Keileffekts bei der Wärmeausdehnung der Kugelschale in axialer Richtung für gleichmäßige Vorspannungen bei einem Temperaturanstieg, der einem unzulässigen Spannungsaufbau entgegenwirkt. Gleichmäßige Vorspannung ist dabei gleichbedeutend mit vorzugsweise im gesamten Temperaturbereich konstantem Reibmoment innerhalb des Kugelgelenks. Damit verbunden ist ein Schutz vor zu hohen Spannungen bei hohen Temperaturen mit nachfolgender Verformung durch Kriechen des Kugelschalenwerkstoffs.

Gemäß einer weiteren bevorzugten Ausführungsform ist eine Vielzahl von Schlitzen, insbesondere drei Schlitze, vorgesehen. Alternativ kann die Anzahl der Schlitze je nach Anforderung 2, 4 oder 6, insbesondere 5 betragen.

Gemäß einer weiteren vorteilhaften Ausführungsform ist das wenigstens eine Federelement im ersten und/oder im zweiten Bereich keilförmig ausgebildet. In der Schnittansicht betrachtet resultiert die Keilform durch eine Zunahme oder Abnahme der Materialstärke. Insbesondere im Fall der weicheren Federelemente im zweiten Bereich nimmt die Materialstärke ausgehend vom bzw. im Anschluss an den ersten Bereiche stark ab, um die entsprechend im Vergleich zum ersten Bereich deutlich geringere Federrate aufzuweisen. Das Federelement wird in diesem zweiten unteren Bereich auf Biegung beansprucht. Es ist auch denkbar, dass in einer Variante der zweite Bereich nicht auf Biegung beansprucht wird bzw. der zweite Bereich damit quasi als nicht vorhanden angesehen werden kann.

Die Kugelschale kann aus Kunststoff (z.B. Polyoxymethylen, Polyamid, PEEK (Polyetheretherketon), Polyphenylsulfid, Polyphtalamid) bestehen bzw. hergestellt sein.

Die Herstellung der Kugelschale kann vorzugsweise in einem einzigen Herstellungsschritt durch Spritzgießen bzw. durch Extrusion erfolgen. Es kann dabei innerhalb des Werkzeugs ein wechselbarer Einsatz vorgesehen sein, um die Anzahl der Schlitze auf einfache Weise je nach Anforderung variieren zu können.

Vorzugsweise ist das Gelenkgehäuse als Kaltfließpressteil ohne mechanische, z.B. spanende Bearbeitung gebildet, was die Herstellungskosten deutlich reduziert. Das Schließen des Gelenkes erfolgt auf einfache Art und Weise durch Umformung, insbesondere Kaltumformung des zylindrischen Randbereichs des Gehäuses in Richtung des Kugelzapfens.

Im Nachfolgenden werden Ausführungsformen der Erfindung unter Bezugnahme auf die beigefügte Zeichnung näher beschrieben. Es zeigen:
Fig. 1 eine Gelenkanordnung gemäß einer Ausführungsform der Erfindung in vormontiertem Zustand;
Fig. 2 die in Fig. 1 dargestellte Gelenkanordnung in montiertem Zustand;
Fig. 3 eine Detailansicht eines unteren Bereichs der in Figur 1 dargestellten Gelenkanordnung; und
Fig. 4A und 4B jeweils isometrische Ansichten der Kugelschale der in Figur 1 dargestellten Gelenkanordnung.

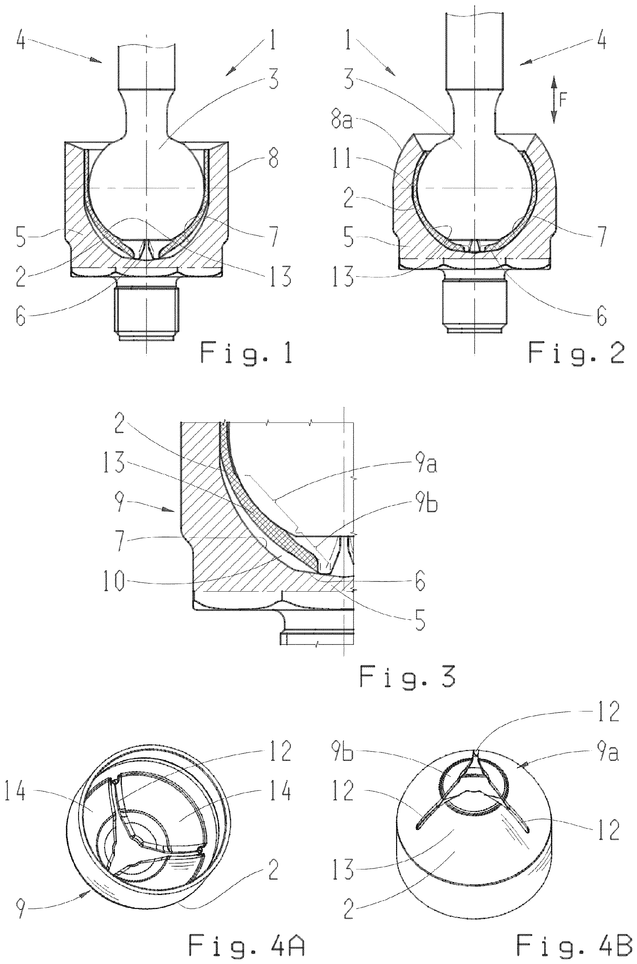

Fig. 1 zeigt eine Schnittdarstellung eines als Axialgelenk ausgebildeten Kugelgelenk 1 gemäß einer Ausführungsform der Erfindung in vormontiertem Zustand. Wie hier erkennbar, ist umfasst das Kugelgelenk eine Kugelschale 2, in welcher eine Gelenkkugel 3 eines Kugelzapfens 4 angeordnet ist. Die Kugelschale 2 ist wiederum in einem Gehäuse 5 aufgenommen. In dem vormontierten Zustand liegt die Kugelschale 2 dabei auf dem Federelement 13, welche näher in Zusammenhang mit Figuren 4A und 4B beschrieben werden, an dem Gehäuseboden 6 an.

Wiederum in einer Schnittdarstellung zeigt Fig. 2 die in Figur 1 dargestellte Gelenkanordnung 1 in montiertem Zustand. Wie hier angedeutet ist, verläuft die Hauptbelastungsrichtung, welche durch den Doppelpfeil mit dem Bezugszeichen F gekennzeichnet ist, axial in Zug- und Druckrichtung. In dem montierten Zustand liegt die Kugelschale 2 an den Tragbereichen, d.h. an der Innenwandung 7 des Gehäuses 5 als auch an der Gelenkkugel vollständig an. Das Federelement 13 (siehe Figuren 4A, 4B) ist dabei vorgespannt und erzeugt eine Vorspannung in dem Kugelgelenk. Der obere Bereich 8 des Gehäuses 5 und der Kugelschale 2 ist umgeformt, um sich dem äußeren Profil der Gelenkkugel 3 anzupassen, so dass die Kugelschale 2 von dem Gehäuse 5 umschlossen und darin fixiert ist. Durch die Umformung des Gehäuses 5 an seinem hier oben dargestellten Randbereich 8a wurde das Gehäuse verschlossen.

Fig. 3 zeigt eine ebenfalls geschnitten dargestellt Detailansicht eines unteren Bereichs 9 der in Figur 1 dargestellten Gelenkanordnung 1. Wie hier erkennbar ist, liegt das Federelement 13 in einem ersten Bereich 9a und in einem zweiten Bereich 9b vor. Das Federelement 13 liegt dargestellt lediglich mit ihrem äußeren Ende des zweiten Bereichs 9b an dem Gehäuseboden 6 an. Im vormontierten Zustand befindet sich ein Zwischenraum 10 zwischen der Innenwandung 7 des Gehäuses 5 und der Kugelschale 2. Wie hier auch erkennbar ist, nimmt die Wanddicke der Kugelschale 2 von der Gehäusemitte, welche in Figur 2 durch das Bezugszeichen 11 gekennzeichnet ist, in Richtung zu dem Gehäuseboden 6 hin bis zu dem Beginn des zweiten Bereichs 9b zu und weist am Ende des ersten unteren Tragbereichs 14 die größte Materialstärke auf. Die Materialstärke des zweiten Bereichs 9b ist gegenüber der Materialstärke des ersten Bereichs 9a deutlich reduziert. Es ist erkennbar, dass die Materialstärke des zweiten Bereichs 9b ausgehend vom unteren Ende des ersten Bereichs 9a zu ihrem unteren Ende hin abnimmt.

Fig. 4A und 4B zeigen jeweils isometrische Ansichten der Kugelschale 2 ohne Kugelzapfen und Gelenkgehäuse gemäß Figur 1. Figur 4A erlaubt dabei eine Innenansicht in die Kugelschale 2, dort wo im montierten Zustand die Kugel gelagert ist. Figur 4B zeigt die Kugelschale 2 in einer Außenansicht. Wie besonders gut in Figur 4B erkennbar ist, sind in der Kugelschale 2 in der hier dargestellten Ausführungsform drei Schlitze 12 vorgesehen, welche lediglich in dem unteren Bereich (9a, 9b) der Kugelschale 2 ausgebildet sind. Das in die Kugelschale integrierte Federelement 13 besteht aus dem sehr steifen Bereich 9a, das durch Stauchung für sehr große Kräfte aber nur geringe Wege wirksam wird, und dem weichen Bereich 9b, welches durch Biegung für kleine Kräfte aber große Wege wirkt. Wie hier und auch in Figur 1 darüber hinaus erkennbar, ist die Kugelschale 2 als Umformschale ausgebildet.

### Bezugszeichen

- 1: Gelenkanordnung
- 2: Kugelschale
- 3: Gelenkkugel, Kugelkopf
- 4: Kugelzapfen
- 5: Gehäuse, Gelenkgehäuse
- 6: Gehäuseboden
- 7: Innenwandung
- 8: oberer Bereich
- 8a: oberer Randbereich
- 9: unterer Bereich
- 9a: erster Bereich
- 9b: zweiter Bereich
- 10: Zwischenraum
- 11: Kugelmitte
- 12: Schlitze
- 13: Federelement(e)
- 14: unterer Tragbereich der Kugelschale

## Patentansprüche

1. Kugelgelenk (1) mit einem in einer Kugelschale (2) aufgenommenen Kugelzapfen (4), die in einem Gelenkgehäuse aufgenommen ist, wobei die Kugelschale (2) einstückig mit wenigstens einem Federelement (13) in einem unteren, von der Gelenkgehäuseöffnung abgewandten Bereich (9) der Kugelschale (2) ausgebildet ist, wobei das Federelement (13) so ausgebildet ist, dass sich im vormontierten Zustand ein Zwischenraum (10) zwischen einer Innenwandung (7) des Gehäuses (5) und der Kugelschale (2) befindet, und im montierten Zustand das Federelement (13) vorgespannt ist, um eine Vorspannung im Kugelgelenk (1) zu erzeugen, wobei das Federelement (13) zumindest teilweise Unterbrechungen aufweist, die durch Schlitze (12) gebildet sind, , so dass durch das Federelement ein Spielausgleich und/oder Verschleißausgleich innerhalb des Kugelgelenks gegeben ist, und wobei das wenigstens eine Federelement (13) einen ersten Bereich (9a) und einen sich unten daran anschließenden zweiten Bereich (9b) aufweist, wobei das wenigstens eine Federelement (13) im ersten und im zweiten Bereich (9a, 9b) keilförmig ausgebildet ist, wobei die Wanddicke der Kugelschale (2) im ersten Bereich (9a) nach unten hin bis zu dem Beginn des zweiten Bereichs (9b) zunimmt und im zweiten Bereich (9b) ausgehend vom unteren Ende des ersten Bereichs (9a) zu ihrem unteren Ende hin abnimmt.

2. Kugelgelenk (1) nach Anspruch 1, **dadurch gekennzeichnet, dass** das Federelement (13) in wenigstens einem der Bereiche (9a, 9b) die Unterbrechungen aufweist.

3. Kugelgelenk (1) nach Anspruch 1 oder 2, **dadurch gekennzeichnet, dass** drei oder fünf Schlitze (12) vorgesehen sind.

4. Kugeigetenk (1) nach einem der vorangehenden Ansprüche, **dadurch gekennzeichnet, dass** der erste Bereich (9a) eine im Vergleich zu den übrigen Bereichen der Kugelschale größere Wanddicke aufweist, sodass die Wanddicke in dem zweiten Bereich (9b) eine geringere als in dem ersten Bereich (9a) ist.

5. Kugelgelenk (1) nach einem der vorangehenden Ansprüche, **dadurch gekennzeichnet, dass** die Kugelschale (2) ausgehend von einer Mitte (11) des Gelenkgehäuses (5) zu dem ersten Bereich (9a) hin eine Wanddicke mit zunehmender Materialstärke aufweist.

6. Kugelgelenk (1) nach einem der vorangehenden Ansprüche, **dadurch gekennzeichnet, dass** die Kugelschale (2) ausgehend von der Gelenkgehäuseöffnung zu dem von der Gelenkgehäuseöffnung abgewandten ersten Bereich (9a) hin eine Wanddicke mit zunehmender Materialstärke aufweist.

7. Kugelgelenk nach einem der vorangehenden Ansprüche, **dadurch gekennzeichnet, dass** die Kugelschale (2) an ihrem unteren Ende offen ist.

8. Kugelgelenk nach Anspruch 7, **dadurch gekennzeichnet, dass** die Schlitze (12) nach unten hin offen sind.

## Claims

1. Ball joint (1) having a ball pivot (4) which is received in a ball socket (2), which ball socket (2) is received in a joint housing, the ball socket (2) being configured in one piece with at least one spring element (13) in a lower region (9) of the ball socket (2), which region (9) faces away from the joint housing opening, the spring element (13) being configured in such a way that, in the pre-assembled state, an intermediate space (10) is situated between an inner wall (7) of the housing (5) and the ball socket (2) and, in the assembled state, the spring element (13) is prestressed, in order to generate a prestress in the ball joint (1), the spring element (13) having, at least in part, interruptions which are formed by way of slots (12), with the result that the spring element provides play compensation and/or wear compensation within the ball joint, and the at least one spring element (13) having a first region (9a) and a second region (9b) which adjoins it at the bottom, the at least one spring element (13) being of wedge-shaped configuration in the first and in the second region (9a, 9b), the wall thickness of the ball socket (2) increasing downwards in the first region (9a) as far as the beginning of the second region (9b) and decreasing in the second region (9b) towards its lower end starting from the lower end of the first region (9a).

2. Ball joint (1) according to Claim 1, **characterized in that** the spring element (13) has the interruptions in at least one of the regions (9a, 9b).

3. Ball joint (1) according to Claim 1 or 2, **characterized in that** three or five slots (12) are provided.

4. Ball joint (1) according to one of the preceding claims, **characterized in that** the first region (9a) has a greater wall thickness in comparison with the remaining regions of the ball socket, with the result that the wall thickness in the second region (9b) is lower than in the first region (9a).

5. Ball joint (1) according to one of the preceding claims, **characterized in that**, starting from a centre (11) of the joint housing (5) towards the first region (9a), the ball socket (2) has a wall thickness with an increasing material thickness.

6. Ball joint (1) according to one of the preceding claims, **characterized in that**, starting from the joint housing opening towards the first region (9a) which faces away from the joint housing opening, the ball socket (2) has a wall thickness with an increasing material thickness.

7. Ball joint according to one of the preceding claims, **characterized in that** the ball socket (2) is open at its lower end.

8. Ball joint according to Claim 7, **characterized in that** the slots (12) are open towards the bottom.

## Revendications

1. Articulation sphérique (1) avec un pivot sphérique (4) logé dans un coussinet sphérique (2), qui est agencé dans un boîtier d'articulation, dans laquelle le coussinet sphérique (2) est réalisé en une seule pièce avec au moins un élément de ressort (13) dans une région inférieure (9) du coussinet sphérique (2) à l'opposé de l'ouverture du boîtier d'articulation, dans laquelle l'élément de ressort (13) est configuré de telle manière qu'il se trouve, dans l'état préassemblé, un espace intermédiaire (10) entre une paroi intérieure (7) du boîtier (5) et le coussinet sphérique (2) et que dans l'état assemblé l'élément de ressort (13) soit précontraint, afin de produire une précontrainte dans l'articulation sphérique (1), dans laquelle l'élément de ressort (13) présente des interruptions au moins partielles, qui sont formées par des fentes (12), de telle manière que l'élément de ressort génère une compensation du jeu et/ou une compensation de l'usure à l'intérieur de l'articulation sphérique, et dans laquelle ledit au moins un élément de ressort (13) présente une première zone (9a) et une deuxième zone (9b) se raccordant par-dessous à celle-ci, dans laquelle ledit au moins un élément de ressort (13) est réalisé en forme de coin dans la première et dans la deuxième zones (9a, 9b), dans laquelle l'épaisseur de paroi du coussinet sphérique (2) augmente dans la première zone (9a) vers le bas jusqu'au commencement de la deuxième zone (9b) et diminue dans la deuxième zone (9b) à partir de l'extrémité inférieure de la première zone (9a) en direction de son extrémité inférieure.

2. Articulation sphérique (1) selon la revendication 1, **caractérisée en ce que** l'élément de ressort (13) présente des interruptions dans au moins une des zones (9a, 9b).

3. Articulation sphérique (1) selon la revendication 1 ou 2, **caractérisé en ce qu'**il est prévu trois ou cinq fentes (12).

4. Articulation sphérique (1) selon l'une quelconque des revendications précédentes, **caractérisée en ce que** la première zone (9a) présente une plus grande épaisseur de paroi par comparaison avec les autres zones du coussinet sphérique, de telle manière que l'épaisseur de paroi dans la deuxième zone (9b) soit plus faible que dans la première zone (9a).

5. Articulation sphérique (1) selon l'une quelconque des revendications précédentes, **caractérisée en ce que** le coussinet sphérique (2) présente une épaisseur de paroi avec une épaisseur de matière croissante à partir d'un milieu (11) du boîtier d'articulation (5) jusqu'à la première zone (9a).

6. Articulation sphérique (1) selon l'une quelconque des revendications précédentes, **caractérisée en ce que** le coussinet sphérique (2) présente une épaisseur de paroi avec une épaisseur de matière croissante à partir de l'ouverture de boîtier d'articulation jusqu'à la première zone (9a) à l'opposé de l'ouverture de boîtier d'articulation.

7. Articulation sphérique selon l'une quelconque des revendications précédentes, **caractérisée en ce que** le coussinet sphérique (2) est ouvert à son extrémité inférieure.

8. Articulation sphérique selon la revendication 7, **caractérisée en ce que** les fentes (12) sont ouvertes vers le bas.
